# EUROPÄISCHE PATENTSCHRIFT

(11) **EP 1 539 562 B1**
(45) Veröffentlichungstag und Bekanntmachung des Hinweises auf die Patenterteilung: **03.06.2015**
(21) Anmeldenummer: 03797278.3
(22) Anmeldetag: 06.09.2003
(51) Int. Cl.: B25J 9/16

(54) **VERFAHREN UND VORRICHTUNG ZUR LAGEGENAUEN MONTAGE EINES ANBAUTEILS AN EINE FAHRZEUGKAROSSERIE**
METHOD AND DEVICE FOR THE POSITIONALLY PRECISE MOUNTING OF AN ADD-ON PART ON A VEHICLE BODY
PROCÉDÉ ET DISPOSITIF POUR MONTER DANS UNE POSITION PRÉCISE UN ÉLÈMENT RAPPORTÉ SUR UNE CARROSSERIE DE VÉHICULE

(30) Priorität: 13.09.2002 DE 10242710
(43) Veröffentlichungstag der Anmeldung: 15.06.2005
(73) Patentinhaber: VMT Vision Machine Technic Bildverarbeitungssysteme GmbH, 68219 Mannheim (DE)
(72) Erfinder: BECKER, Frauke, 71106 Magstadt (DE); SCHRECK, Andreas, 89134 Blaustein (DE); SCHULER, Bernd, 72221 Haiterbach (DE); STAHS, Thomas, 89081 Ulm (DE)
(74) Vertreter: Vonnemann, Gerhard
(86) Internationale Anmeldenummer: PCT/EP2003/009922
(87) Internationale Veröffentlichungsnummer: WO 2004/026673

(56) Entgegenhaltungen:
- EP-A- 0 361 663
- US-A- 4 670 974
- XP 002278110 Extract from CD-ROM "Integrated Architecture Logix Platforms" Date: December 2000 by Rockwell Automation CD-ROM Publication Number: 957173-04
- [Online] XP002279818 Gefunden im Internet: URL:http://www.ti.com/sc/docs/msp/41002.pd f> [gefunden am 2001]

## Beschreibung

Die Erfindung betrifft ein Verfahren zur Montage eines Anbauteils an ein Werkstück, insbesondere an eine Fahrzeugkarosserie, bei dem das Anbauteil lagegenau gegenüber einem Referenzbereich auf dem Werkstück montiert wird, nach dem Oberbegriff des Patentanspruchs 1, wie es beispielsweise aus der EP 470 939 A1 als bekannt hervorgeht. Weiterhin betrifft die Erfindung ein Montagesystem zur Durchführung dieses Verfahrens.

An Fahrzeugkarosserien werden im Zuge der Montage an unterschiedlichen Stellen im Außen- und im Innenbereich Anbauteile (z.B. Heckmodul, Frontmodul, Dachmodul, Cockpit, ...) anbzw. eingebaut. Im Interesse einer qualitativ hochwertigen Anmutung der Karosserie ist es notwendig, diese Anbauteile hochgenau gegenüber benachbarten Bereichen auf der Karosserie bzw. gegenüber anderen (benachbarten) An- und Einbauteilen auszurichten und so zu positionieren, dass vorgegebene (Spalt-)Übergangsmaße zwischen dem Anbauteil und den angrenzenden Karosseriebereichen gewährleistet ist. Hierzu muss das Anbauteil lagegenau gegenüber der Karosserie ausgerichtet und in diesem Zustand mit Hilfe eines Fügeverfahrens - beispielsweise durch Anschrauben, Punktschweißen oder Kleben - an der Karosserie befestigt werden.

So muss beispielsweise das Frontmodul in einer solchen Weise in die (Rest-)Karosserie eingepasst werden, dass zwischen dem Frontmodul und der Motorhaube bzw. zwischen Frontmodul und den Kotflügeln möglichst gleichmäßige Spaltmaße und Übergänge erreicht werden. Um eine solche hochgenaue Ausrichtung des Frontmodul gegenüber den benachbarten Karosseriebereichen sicherzustellen, muss das Frontmodul zunächst lagegenau gegenüber den Nachbarbereichen der Karosserie ausgerichtet werden und anschließend in diesem Zustand mit der Karosserie verbunden werden.

In der EP 470 939 A1 wird ein Montageverfahren vorgeschlagen, mit Hilfe dessen eine lagegenaue Ausrichtung und Befestigung eines Anbauteils - insbesondere einer Fahrzeugtür - in einem Türausschnitt einer Fahrzeugkarosserie erreicht werden soll. Hierbei kommt ein robotergeführtes Montagewerkzeug zum Einsatz, das das Anbauteil aus einem Werkstückträger entnimmt und in den Türausschnitt einsetzt. Bei diesem Verfahren wird das Montagewerkzeug zunächst - ohne Anbauteil - in eine (raumfeste) Referenzposition gegenüber dem Türausschnitt bewegt; in dieser Referenzposition werden mit Hilfe von Kameras, die fest mit dem Montagewerkzeug verbunden sind, Bilder des Umgebungsbereichs des Türausschnitts aufgenommen, aus denen die Position des Türausschnitts relativ zur Referenzposition des Montagewerkzeugs berechnet wird. Anschließend entnimmt das Montagewerkzeug ein Anbauteil aus dem Werkstückträger. Dann wird das Montagewerkzeug - diesmal mit Anbauteil - wieder in die Referenzposition bewegt; in dieser Referenzposition wird mit Hilfe der auf dem Montagewerkzeug montierten Kameras ein weiterer (zweiter) Satz von Bildern- aufgenommen, aus denen die Position des im Montagewerkzeug gehaltenen Anbauteils berechnet wird. Durch einen Vergleich der beiden Bilddatensätze wird ein Verschiebungsvektor ermittelt, um den das Montagewerkzeug verschoben wird, um einen Versatz zwischen den Raumlagen des Türausschnitts und des Anbauteils zu kompensieren und so das Anbauteils gegenüber dem Türausschnitt auszurichten. In dieser korrigierten Raumlage wird das Anbauteil (unter Verwendung von Schweißrobotern) mit der Karosserie verbunden.

Das aus der EP 470 939 A1 bekannte Verfahren geht aus von zwei Bilddatensätzen des Türausschnitts bzw. des Anbauteils, die beide in einer (raumfesten) Referenzposition des Montagewerkzeugs aufgenommen werden. Das Verfahren basiert somit auf einer Erfassung der Absolutlagen der Karosserie und des Anbauteils relativ zu der Referenzposition im Arbeitsraum des Roboters, an dessen Arm das Montagewerkzeug befestigt ist. Zur erfolgreichen Anwendung dieses Verfahrens müssen mehrere Randbedingungen erfüllt sein:
- Zunächst muss jede für die Positionsbestimmung zum Einsatz kommende Kamera in der Lage sein, einzelne Messwerte metrisch in bezug auf ihr internes Bezugskoordinatensystem zu bestimmen ("interne metrische Kalibrierung der Kameras").
- Weiterhin muss die Lage der Kameras im Arbeitsraum des Roboters bekannt sein ("externe metrische Kalibrierung der Kameras").
- Schließlich müssen die Einzelmessungen der Kameras auf eine solche Weise kombiniert und verdichtet werden, dass die genaue Absolutlage des Karosserieausschnitts bzw. des Anbauteils in bezug auf den Arbeitsraum des Roboters konsistent und prozesssicher berechnet werden kann.
Zur Kalibrierung der Sensoren ist in der EP 407 939 A1 eine nicht näher beschriebene Kalibriervorrichtung vorgesehen, die in jedem Zyklus des Roboters angefahren werden muss. Erfahrungsgemäß ist dabei der für die Erfüllung der obengenannten Randbedingungen notwendige Einricht- und Kalibrieraufwand der Kameras und des Gesamtsystems sehr hoch und nur von Experten zu leisten. Außerdem ist eine hohe Genauigkeit und Reproduzierbarkeit der Messwerte nur durch hochwertige (und daher teuere) Sensoren zu leisten.

Eine weitere Problematik des in der EP 470 939 A1 vorgeschlagenen Verfahrens besteht darin, dass die Bilddatengewinnung des Karosserieausschnitts einerseits und des Anbauteils andererseits in unterschiedlichen, zeitlich versetzten Prozessschritten erfolgen. Auch geringfügige Bewegungen der Karosserie während des Positioniervorgangs führen daher zu Fehlern und müssen ausgeschlossen werden.

Aus der US 4 670 974 ist ein Verfahren zur Montage eines Einbauteils (bzw. einer Windschutzscheibe) in ein Werkstück (bzw. eine Fahrzeugkarosserie) bekannt, bei dem ein robotergeführtes Montagewerkzeug mit einem fest damit verbundenen Sensorsystem zum Einsatz kommt. Das robotergeführte Montagewerkzeug wird in eine Montageposition gebracht, in der die im Montagewerkzeug gehaltene Windschutzscheibe lagegenau gegenüber einem Referenzbereich der Karosserie ausgerichtet ist. Hierzu werden Messwerte des Sensorsystems aufgenommen und ausgewertet, um die Absolutposition der Karosserie im Arbeitsraum des Roboters zu bestimmen. Die Gewinnung solcher Absolutpositionen setzt voraus, dass die Sensoren, die die zugehörigen Signale liefern, einer inneren und einer äußeren Kalibration unterzogen worden sind, weil nur so sichergestellt werden kann, dass sie akkurate Messwerte im Arbeitsraum des Roboters liefern. Auch in dem in der US 4 670 974 beschriebenen Verfahren ist daher der Einricht- und Kalibrieraufwand der Kameras und des Gesamtsystems sehr hoch.

Weiterhin ist aus der DE 199 30 087 A1 ein Verfahren zur Regelung einer Vorhalteposition eines mit einem Einbauteil bestückten Montagewerkzeugs gegenüber einem Werkstück bekannt. Das Montagewerkzeug ist mit einem fest damit verbundenen Sensorsystem versehen, mit dessen Hilfe Messwerte des Werkstücks aufgenommen werden. Basierend auf diesen Messwerten wird ein Regelungsvorgang durchlaufen, im Zuge dessen das Montagewerkzeug gegenüber dem Werkstück positioniert und ausgerichtet wird. Dieses Verfahren ermöglicht jedoch nur dann eine lagegenaue Montage des Anbauteils am Werkstück, wenn das Anbauteil lagegenau am Montagewerkzeug befestigt ist und keine Formfehler aufweist. Dies ist erfahrungsgemäß nur selten der Fall.

Der Erfindung liegt somit die Aufgabe zugrunde, ein Verfahren zur lagegenauen Montage eines Anbauteils an ein Werkstück, insbesondere an eine Fahrzeugkarosserie, vorzuschlagen, das mit einem wesentlich reduzierten Kalibrieraufwand verbunden ist und das - auch bei Verwendung kostengünstiger Sensoren - eine Steigerung der Genauigkeit gegenüber bekannten Verfahren gestattet. Der Erfindung liegt weiterhin die Aufgabe zugrunde, eine zur Durchführung des Verfahrens geeignetes Montagesystem vorzuschlagen.

Die Aufgabe wird erfindungsgemäß durch die Merkmale der Ansprüche 1 und 6 gelöst.

Zur Positionierung und Befestigung des Anbauteils an der Karosserie kommt ein mittels eines Roboters geführtes Montagewerkzeug zum Einsatz, das eine Fixiervorrichtung zur Aufnahme des Anbauteils und ein fest mit dem Montagewerkzeug verbundenes Sensorsystem umfasst. Die Fixiervorrichtung des Montagewerkzeugs wird mit einem Anbauteil bestückt und zunächst probotergesteuert in eine (fest einprogrammierte, von der aktuellen Lage der Karosserie im Arbeitsraum des Roboters unabhängige) sogenannte "Näherungsposition" gegenüber der Karosserie gebracht. Ausgehend von dieser Näherungsposition wird ein Regelprozess durchlaufen, im Zuge dessen das Montagewerkzeug in eine sogenannte "Montageposition" bewegt wird, in der das in der Fixiervorrichtung gehaltene Anbauteil lagegenau in der gewünschten Einbaulage gegenüber der Karosserie ausgerichtet ist. Im Zuge des Regelprozesses werden vom Sensorsystem (Ist-) Messwerte ausgewählter Referenzbereiche auf der Karosserie und auf dem Anbauteil erzeugt; diese (Ist-) Messwerte werden mit (Soll-)Messwerten verglichen, die in einer vorausgehenden Einrichtphase erzeugt wurden. Anschließend wird das Montagewerkzeug um einen Verschiebungsvektor (umfassend Linearverschiebungen und/oder Drehungen) verschoben, der unter Zuhilfenahme einer sogenannten "Jacobimatrix" (oder "Sensitivitätsmatrix") aus einer Differenz zwischen den (Ist-) und (Soll-) Messwerten berechnet wird. Sowohl die (Soll-) Messwerte als auch die Jacobimatrix werden im Rahmen einer - dem eigentlichen Positioniert- und Montagevorgang vorgeschalteten - Einrichtphase ermittelt, im Rahmen derer das Montagewerkzeug auf die konkrete Montageaufgabe (d.h. eine konkrete Kombination aus Montagewerkzeug, Sensorsystem, Karosserietyp und Art und Einbauposition des einzusetzenden Anbauteils) eingelernt wird. Dieses Einrichtverfahren ist besonders vorteilhaft, da es allein durch "Zeigen" einer Soll-Position von angelerntem Personal durchgeführt werden kann.

Ist der oben beschriebene Regelvorgang abgeschlossen und befindet sich das im Montagewerkzeug gehaltene Anbauteil somit in der gewünschten Montageposition gegenüber der Karosserie, so wird das Anbauteil in dieser Lage und Ausrichtung an die Karosserie montiert. Hierbei wird beispielsweise mit Hilfe robotergeführter Schraubwerkzeuge das Anbauteil mit der Karosserie verschraubt. Anschließend wird die Fixiervorrichtung des Montagewerkzeugs gelöst, und das Montagewerkzeug wird in eine Rückzugsposition bewegt, in der die Karosserie kollisionsfrei aus dem Arbeitsbereich des Roboters entfernt und eine neue Karosserie zugeführt werden kann.

Der in einer Regelschleife durchlaufene Positioniervorgang, im Rahmen dessen das im Montagewerkzeug gehaltene Anbauteil von der (robotergesteuert angefahrenen) Näherungsposition in die (lagegenau zur Karosserie ausgerichtete) Montageposition gebracht wird, unterscheidet sich grundlegend von dem aus der EP 470 939 A1 bekannten Positioniervorgang: Im Verfahren der EP 470 939 A1 wird nämlich im Zuge der Positionierung zunächst die Absolutposition der Karosserie (bzw. des Karosserieausschnitts) im Arbeitsraum des Roboters ermittelt, die dann die Basis für die Ausrichtung des bestückten Montagewerkzeugs bildet. Im Unterschied dazu beruht das erfindungsgemäße Verfahren auf Relativmessungen, im Rahmen derer eine (in der Einrichtphase hinterlegte) Lage-Information - entsprechend einem Satz von (Soll-) Messwerten des Sensorsystems - über den Regelvorgang wiederhergestellt wird.

Dies führt zu zwei wesentlichen Vereinfachungen gegenüber dem Stand der Technik:
- Zum einen ist keine interne metrische Kalibrierung der Sensoren mehr notwendig, da die zum Einsatz kommenden Sensoren nicht mehr "messen", sondern lediglich auf eine monotone Inkrementalbewegung des Roboters mit einer monotonen Änderung ihres Sensorsignals reagieren. Dies bedeutet beispielsweise, dass bei Verwendung einer Fernseh- bzw. CCD-Kamera als Sensor die kamerainternen Linsenverzeichnungen nicht kompensiert werden müssen bzw. dass bei Verwendung eines Triangulationssensors die exakte metrische Berechnung von Abstandswerten entfällt.
- Weiterhin ist keine externe metrische Kalibrierung der Sensoren mehr notwendig: Im Unterschied zum Stand der Technik muss die Lage der Sensoren nicht mehr metrisch in Bezug auf den Arbeitsraum des Roboters bzw. das Koordinatensystem der Roboterhand ermittelt werden, um geeignete Korrekturbewegungen berechnen zu können. Die Sensoren müssen lediglich in einer solchen Weise am Montagewerkzeug befestigt werden, dass sie in ihrem Fangbereich überhaupt geeignete Messdaten der Referenzbereiche auf der Karosserie und des Anbauteils erfassen können.

Auf die in der Regel nur mit großem Aufwand zu ermittelnde metrische Messfunktion und die in der EP 470 939 A1 gezeigte Kalibriervorrichtung kann somit bei Verwendung des erfindungsgemäßen Verfahrens vollständig verzichtet werden. Daher können metrisch unkalibrierte Sensoren zum Einsatz kommen, die wesentlich einfacher und somit auch billiger sind als kalibrierte Sensoren. Sowohl der instrumentelle Aufbau als auch die Einrichtung und der Betrieb des Gesamtsystems ist daher bei Verwendung des erfindungsgemäßen Verfahrens sehr kostengünstig realisierbar. Weiterhin wird bei Verwendung des erfindungsgemäßen Verfahrens die Ersteinrichtung und Wartung des Montagesystems drastisch vereinfacht und kann auch von angelerntem Personal vorgenommen werden.

Das Ergebnis der Positionierung des Anbauteils gegenüber der Karosserie ist weiterhin unabhängig von der absoluten Positioniergenauigkeit des verwendeten Roboters, da eventuelle Roboterungenauigkeiten bei der Anfahrt der Montageposition ausgeregelt werden. Aufgrund der daraus resultierenden kurzen Fehlerketten ist bei Bedarf eine sehr hohe Wiederholgenauigkeit im Positionierergebnis erzielbar.

Die Anzahl der Positionsfreiheitsgrade, die mit dem erfindungsgemäßen Verfahren in der Positionierphase kompensiert werden können, ist frei wählbar und hängt nur von der Konfiguration des Sensorsystems ab. Ebenso ist die Anzahl der verwendeten Sensoren frei wählbar. Die Anzahl der bereitgestellten (skalaren) Sensorinformationen muss lediglich gleich oder größer der Anzahl der zu regelnden Freiheitsgrade sein. Insbesondere kann eine größere Zahl von Sensoren vorgesehen werden, und die redundante Sensorinformation kann verwendet werden, z.B. um Formfehler des betrachteten Karosseriebereichs und/oder des einzupassenden Anbauteils besser erfassen zu können oder den Positioniervorgang in seiner Genauigkeit zu verbessern. Schließlich kann Sensorinformation aus unterschiedlichen berührungsfreien und/oder taktilen Quellen verwendet werden (z.B. eine Kombination von CCD-Kameras, optischen Spaltsensoren und taktilen Abstandssensoren). Somit können durch Verwendung geeigneter Sensoren die Messergebnisse unterschiedlicher qualitätsrelevanter Größen (z.B. Spaltmaße, Übergangsmaße, Tiefenmaße) beim Einpassprozess des Anbauteils berücksichtigt werden. Bei Montageaufgaben an Fahrzeugkarosserien können mit besonderem Vorteil berührungsfreie, im UV-Spektralbereich messende (z.B. Spalt-) Sensoren verwendet werden, die sich durch eine hohe Unempfindlichkeit gegenüber unterschiedlichen Oberflächeneigenschaften auszeichnen und daher zur Erfassung geometrischer Merkmale auf transparenten Oberflächen und auf lackierten oder unlackierten Fahrzeugkarosserien besonders geeignet sind. Solche Sensoren sowie das zugrundeliegende Messprinzip ist beispielsweise in der deutschen Patentanmeldung 103 36 666.0 beschrieben.

Das erfindungsgemäße Verfahren kann sehr leicht auf neue Problemstellungen adaptiert werden, da lediglich die Sensordatengewinnung und -aufbereitung, nicht aber der regelnde Systemkern adaptiert werden muss. Auf eine Nutzung von Modellwissen über die Karosserie und das einzufügende Anbauteil kann während des Positioniervorgangs verzichtet werden.

Im Vergleich zu dem Verfahren der EP 470 939 A1 gestattet die Erfindung einen wesentlich schnelleren Ausgleich von Restunsicherheiten, die bei der Positionierung des Anbauteils gegenüber dem Karosserieausschnitt auftreten können; solche Restunsicherheiten können zustande kommen durch fördertechnisch bedingte Lagefehler der Karosserie im Arbeitsbereich des Roboters, durch Lageabweichungen des Anbauteils im Montagewerkzeug und/oder durch Formfehler des einzufügenden Anbauteils bzw. der Karosserie, welche durch Bauteiltoleranzen und Toleranzen im Modulaufbau bedingt sind. Weiterhin werden Fehler des Roboters (z.B. Veränderungen aufgrund von Temperaturschwankungen oder -unterschieden) kompensiert.

Aufgrund dieser schnellen Positionsregelung des Montagewerkzeugs gegenüber der Karosserie braucht die Karosserie während des Positioniervorgangs nicht stationär aufgespannt sein, sondern sie kann (beispielsweise auf einem Montageband oder einer anderen geeigneten Fördertechnik) gegenüber dem Roboter bewegt werden. Dies ermöglicht eine hohe Flexibilität des erfindungsgemäßen Verfahrens, das somit auf unterschiedlichste Anwendungsfälle der Montage von Anbauteilen an stationären und bewegten Werkstücken anwendbar ist.

Das geregelte Anfahren der Montageposition kann in einer einzigen Regelschleife erfolgen; vorteilhafterweise wird dabei jedoch ein iteratives Verfahren eingesetzt, bei dem Schwellwerte als Abbruchkriterien vorgegeben werden: So wird der Iterationsvorgang abgebrochen, wenn die Abweichung zwischen dem eingelernten (Soll-)Messwert und dem aktuellen (Ist-)Messwert unterhalb eines vorgegebenen Schwellwerts liegt; weiterhin wird der Iterationsvorgang abgebrochen, wenn die bei aufeinanderfolgenden Iterationsschritten zu erreichende Reduktion der Abweichung zwischen (Soll-)Messwert und (Ist-)Messwert unterhalb eines weiteren vorgegebenen Schwellwerts liegt.

Das durch den Regelprozess in der Montageposition ausgerichtete Anbauteil kann - wie oben beschrieben - durch Verschrauben, Punktschweißen etc. direkt mit der Karosserie verbunden werden. Alternativ kann jedoch ein Fügeverfahren verwendet werden, bei dem das in der Montageposition ausgerichtete Anbauteil vor der eigentlichen Befestigung an der Karosserie kurzfristig aus der Montageposition entfernt werden muss, um beispielsweise eine Klebstoffraupe auf einen Verbindungsbereich des Karosserieausschnitts und/oder des Anbauteils aufzubringen. In diesem Fall umfasst das Montageverfahren vorteilhafterweise die folgenden Prozessschritte:
A Das Montagewerkzeug wird mit einem einzubauenden Anbauteil bestückt und wird - entsprechend des oben beschriebenen iterativen Regelvorgangs - von der (gesteuert angefahrenen) Näherungsposition in die Montageposition gegenüber der Karosserie bewegt, in der das Anbauteil lagegenau gegenüber dem Karosserieausschnitt ausgerichtet ist;
B das Montagewerkzeug wird robotergesteuert aus der Montageposition um einen fest vorgegebenen Versatz in eine Ausweichposition verschoben, um im Montagebereich Platz für ein robotergeführtes Hilfswerkzeug, beispielsweise einen Kleberoboter, zu schaffen;
C das Hilfswerkzeug wird in den Montagebereich hineinbewegt, bearbeitet dort den Karosserieausschnitt und/oder das Anbauteil (indem er beispielsweise auf den Karosserieausschnitt eine Klebstoffraupe aufbringt) und wird anschließend aus dem Montagebereich herausbewegt;
D das Montagewerkzeug wird robotergesteuert um den fest vorgegebenen Versatz aus der Ausweichposition zurück in die Montageposition verschoben (und das im Montagewerkzeug gehaltene Anbauteil somit wieder lagegenau im Montagebereich positioniert);
E das Anbauteil wird ggf. mit Hilfe eines weiteren Hilfswerkzeugs am Karosseriebereich befestigt (oder - im Falle einer Klebeverbindung - in der Montageposition gehalten, bis ein erstes Vernetzen des Klebers erfolgt ist);
F die Fixiervorrichtung des Montagewerkzeugs gelöst, und das Montagewerkzeug wird in die Rückzugsposition bewegt.

Der Prozessschritt B entspricht hierbei einer "Auslagerung" des Anbauteils, welcher in Prozessschritt D rückgängig gemacht wird. Wesentlich dabei ist die Tatsache, dass die Prozessschritte B, D und E robotergesteuert als Relativbewegungen zu der in Prozessschritt A aufgefundenen Montageposition durchgeführt werden, so dass die im Regelvorgang des Prozessschritts A aufgefundene Montageposition als Referenzlage für die an diesen Prozessschritten beteiligten weiteren Hilfswerkzeuge verwendet werden kann. In Prozessschritt E des Montageverfahrens kann vorteilhafterweise eine zusätzliche Ausregelung der Zielposition des Anbauteils erfolgen, um Ungenauigkeiten des Prozessschritts zu eliminieren.

Weitere vorteilhafte Ausgestaltungen der Erfindung sind den Unteransprüchen zu entnehmen. Im folgenden wird die Erfindung anhand eines in den Zeichnungen dargestellten Ausführungsbeispiels näher erläutert; dabei zeigen:
- Fig. 1: eine schematische Frontalansicht eines Frontbereichs einer Fahrzeugkarosserie;
- Fig. 2: eine schematische Seitenansicht eines Frontausschnitts einer Fahrzeugkarosserie und eines robotergeführten Montagewerkzeugs mit einem Frontmodul;
- Fig. 3: eine schematische Aufsicht auf die Karosserie und das Montagewerkzeug der Figur 2;
- Fig. 4: eine schematische Darstellung der Verfahrbahn des Montagewerkzeugs bei der Abarbeitung der Frontmodul-Montage der Figuren 1 bis 3;
- Fig. 5: eine schematische Schnittansicht eines Dachbereichs einer Fahrzeugkarosserie während der Dachmodulmontage
Fig. 5a ... mit Dachmodul in Montageposition und
Fig. 5b ... mit Dachmodul in Ausweichposition.

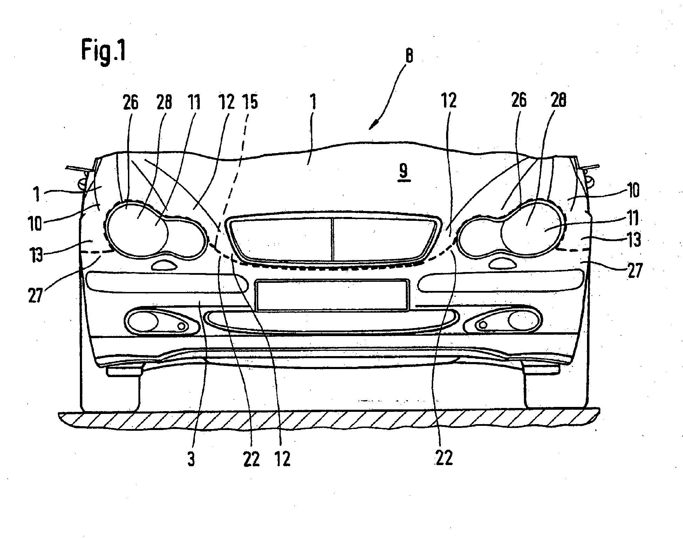

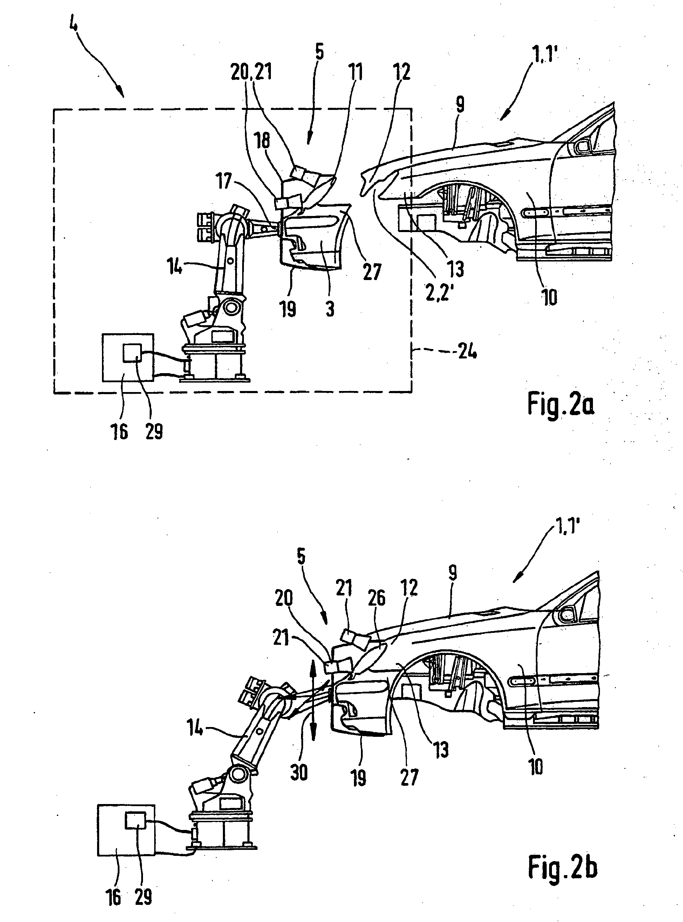

Figur 1 zeigt eine Frontalansicht eines Fahrzeugs 8 mit einem Frontmodul 3 als Beispiel eines Anbauteils, das im Rahmen der Fahrzeugmontage an ein Werkstück, nämlich eine Rohkarosserie 1 angeschraubt wird. Figur 2a zeigt den Frontbereich dieser Rohkarosserie 1 mit einem Frontausschnitt 2, in den das Frontmodul 3 eingebaut wird, in einer Seitenansicht. Die Karosserie 1 umfasst eine Motorhaube 9 und Kotflügel 10, während ein Scheinwerfermodul 11 Teil des Frontmoduls 3 bildet.

Um einen qualitativ hochwertigen optischen Eindruck des fertigen Fahrzeugs 8 sicherzustellen, muss das Frontmodul 3 lagegenau (in bezug auf Position und Winkellage) gegenüber den dem Frontausschnitt 2 der Karosserie 1 benachbarten Bereichen 12,13 auf der Motorhaube 9 und den Kotflügeln 10 montiert werden; insbesondere muss ein zwischen Frontmodul 3, Motorhaube 9 und Kotflügeln 10 vorliegender Spalt 15 (in Figur 1 gestrichelt gezeichnet) ein vorgegebenes, bestimmten Anforderungen entsprechendes Maß aufweisen. Die Umgebungsbereiche 12,13,9 bilden dabei einen sogenannten Referenzbereich zur Ausrichtung des Frontmoduls 3 gegenüber der Karosserie 1.

Die Montage des Frontmoduls 3 in die Karosserie 1 erfolgt mit Hilfe eines von einem Industrieroboter 14 geführten Montagewerkzeugs 5, das das Frontmodul 3 zuführt und lagegenau gegenüber dem Frontausschnitt 2 der Karosserie 1 positioniert. Zur Lage- und Bewegungssteuerung des Roboters 14 und des Montagewerkzeugs 5 ist ein Steuersystem 16 vorgesehen.

Das Montagewerkzeug 5 ist an der Hand 17 des Industrieroboters 14 befestigt und umfasst einen Rahmen 18, an dem eine Fixiervorrichtung 19 befestigt ist, mit Hilfe derer das Frontmodµl 3 aufgenommen werden kann. Die Fixiervorrichtung 19 ist vorteilhafterweise dreh- und/oder schwenkbar gegenüber dem Rahmen 18 des Montagewerkzeugs 5 angeordnet, so dass sie das Frontmodul 3 nach Abschluss der Montage leicht freigeben kann und aus dem Montagebereich entfernt werden kann.

Zur Vermessung der Lage und Ausrichtung des im Montagewerkzeug 5 fixierten Frontmoduls 3 gegenüber der Karosserie 1 ist das Montagewerkzeug 5 mit einem Sensorsystem 20 mit mehreren (in der schematischen Darstellung der Figur 2 zwei) Sensoren 21 versehen, die starr mit dem Rahmen 18 des Montagewerkzeugs 5 verbunden sind; sie bilden somit mit dem Montagewerkzeug 5 eine bauliche Einheit. Diese Sensoren 21 dienen zur Ermittlung von Spalt- und/oder Übergangsmaßen zwischen Randbereichen 22 des Frontmoduls 3 und den Nachbarbereichen 12,13 auf Motorhaube 9 und Kotflügeln 10 der Karosserie 1. Mit Hilfe dieses Sensorsystems 20 wird - wie weiter unten beschrieben - das in dem Montagewerkzeug 5 gehaltene Frontmodul 3 in einem iterativen Regelvorgang gegenüber dem Frontausschnitt 2 der Karosserie 1 ausgerichtet.

Soll das Montagesystem 5 auf eine neue Bearbeitungsaufgabe - beispielsweise auf die Frontmodulmontage in einem neuen Fahrzeugtyp - eingestellt werden, so muss zunächst eine sogenannte Einrichtphase durchlaufen werden, in der das Montagewerkzeug 5 konfiguriert wird. Dabei wird eine dem zu montierenden Frontmodul 3 angepasste Fixiervorrichtung 19, ein geeignet gestalteter Rahmen 18 und ein Sensorsystem 20 mit entsprechenden Sensoren 21 ausgewählt und zusammengebaut. Im Anschluss daran wird das Sensorsystem 20 des Montagewerkzeugs 5 "eingelernt", indem - wie im folgenden unter I. beschrieben - (Soll-) Messwerte des Sensorsystems 20 auf einer "Master"-Karosserie 1' und einem "Master"-Frontmodul 3' aufgenommen werden und die gesteuert zu durchlaufenden Bahnabschnitte einer Verfahrbahn 23 des Roboters 14 einprogrammiert werden. Nach Beendigung dieser Einrichtphase steht das so konfigurierte und eingemessene Montagesystem 4 nun zum Serieneinsatz bereit, bei dem für jede einem Arbeitsraum 24 des Roboters 14 zugeführte Karosserie 1 eine sogenannte Arbeitsphase durchlaufen wird, bei der - wie im folgenden unter II. beschrieben - ein zugehöriges Frontmodul 3 im Frontausschnitt 2 der Karosserie 1 positioniert und befestigt wird.

### I. Einrichtphase des Montagewerkzeugs 5:

Zur Lösung einer neu gestellten Montageaufgabe wird in einem ersten Schritt zunächst ein der Montageaufgabe angepasstes Sensorsystem 20 für das Montagewerkzeug 5 ausgewählt und gemeinsam mit der Fixiervorrichtung 19 am Rahmen 18 befestigt. Das so zusammengebaute Montagewerkzeug 5 wird an der Roboterhand 17 befestigt. Die Fixiervorrichtung 19 wird dann mit einem ("Master"-) Frontmodul 3' bestückt und (manuell bzw. interaktiv) in einer solchen Weise gegenüber einer ("Master"-) Karosserie l' im Arbeitsraum 24 des Roboters 14 ausgerichtet, dass eine "optimale" Ausrichtung des ("Master"-) Frontmoduls 3' gegenüber der ("Master"-) Karosserie l' gegeben ist; diese Relativlage des ("Master"-) Frontmoduls 3' gegenüber der ("Master"-) Karosserie 1' ist in Figur 2b dargestellt. Eine solche "optimale" Ausrichtung kann beispielsweise dadurch definiert sein, dass der Spalt 15 zwischen dem ("Master"-) Frontmodul 3' und der ("Master"-) Karosserie 1' möglichst gleichförmig ist (siehe Figur 1), oder dass der Spalt 15 in bestimmten Regionen bestimmte Werte einnimmt. Die dabei eingenommene Relativposition des Montagewerkzeugs 5 gegenüber der ("Master"-) Karosserie 1' wird im folgenden als "Montageposition" 25 bezeichnet.

Die Zahl und die Lage der Sensoren 21 auf dem Rahmen 18 ist so gewählt, dass die Sensoren 21 auf geeignete, für die "optimale" Ausrichtung besonders wichtige, Bereiche 12,13 auf der ("Master"-) Karosserie 1' bzw. Bereiche 22 des ("Master"-) Frontmoduls 3' gerichtet sind. Im Ausführungsbeispiel der Figur 2a sind symbolisch zwei Sensoren 21 gezeigt von denen einer auf den Spalt 15 zwischen dem oberen Randbereich 26 des Scheinwerfermoduls 11 und dem in Zusammenbaulage angrenzenden Bereich 12 der Motorhaube 9 gerichtet ist, während der andere eine Spaltmessung zwischen dem Seitenbereich 27 des Frontmoduls 3 und dem Vorderbereich 13 des Kotflügels 10 (oder zwischen Scheinwerfer 28 und Kotflügeln 10) durchführt. Die Zahl der Einzelsensoren 21 sowie die Umgebungen 12,13,26,27, auf die sie ausgerichtet sind, werden in einer solchen Weise ausgewählt, dass sie eine bestmögliche Charakterisierung der für den jeweiligen Anwendungsfall relevanten Qualitätsmerkmale gestatten. Neben den Spaltmessungssensoren können weitere Sensoren vorgesehen sein, die beispielsweise einen (Tiefen-)Abstand zwischen Karosserie 1 und Frontmodul 3 messen. Um einerseits eine möglichst hohe Unempfindlichkeit gegenüber Lackeffekten der Karosserie 1 zu erhalten und um andererseits auch auf den (transparenten) Kunststoff-Abdeckungen 28 der Scheinwerfermodule 11 verwertbare Messergebnisse zu erreichen, werden vorteilhafterweise optische Sensoren im UV-Spektralbereich eingesetzt.

Das Montagewerkzeug 5 mit dem Sensorsystem 20 und mit dem in der Fixiervorrichtung 19 gehaltenen ("Master"-) Frontmodul 3' wird nun mit Hilfe des Roboters 14 auf die (durch das manuelle bzw. interaktive Ausrichten eingestellte, in der Darstellung der Figur 2b eingenommene) Montageposition 25 gegenüber der ("Master"-) Karosserie 1' "eingelernt". Hierbei werden zunächst Messwerte aller Sensoren 21 in der Montageposition 25 aufgenommen und als "Soll-Messwerte" in einer Auswerteeinheit 29 des Sensorsystems 20 abgelegt; diese Sensor-Auswerteeinheit 29 ist zweckmäßigerweise in das Steuersystem 16 des Roboters 14 integriert. Anschließend wird - ausgehend von der Montageposition 25 - mit Hilfe des Roboters 14 die Lage des Montagewerkzeugs 5 und des darin gehaltenen ("Master"-) Frontmoduls 3' gegenüber der ("Master"-) Karosserie 1' entlang bekannter Verfahrbahnen - wie in Figur 2b durch Pfeile 30 angedeutet - systematisch verändert; in der Regel sind dies Inkrementalbewegungen des Roboters 14 in seinen Freilieitsgraden. Die dabei auftretenden Veränderungen der Messwerte der Sensoren 21 werden (vollständig oder in Teilen) aufgezeichnet. Aus diesen Sensorinformationen wird - in bekannter Weise - eine sogenannte Jacobimatrix (Sensitivitätsmatrix) errechnet, die den Zusammenhang zwischen den Inkrementalbewegungen des Roboters 14 und den dabei auftretenden Änderungen der Sensormesswerte beschreibt. Das Verfahren zur Ermittlung der Jacobimatrix ist beispielsweise beschrieben in "A tutorial on visual servo control" von S. Hutchinson, G. Hager und P. Corke, IEEE Transactions on Robotics and Automation 12(5), Oktober 1996, Seiten 651-670. In diesem Artikel sind auch die Anforderungen an die Verfahrwege bzw. die Messumgebungen beschrieben (Stetigkeit, Monotonie, ...), die erfüllt sein müssen, um eine gültige Jacobimatrix zu erhalten. - Die Inkrementalbewegungen sind in einer solchen Weise ausgewählt, dass während dieses Einrichtvorgangs keine Kollisionen des Montagewerkzeugs 5 bzw. des ("Master"-) Frontmoduls 3' mit der ("Master"-) Karosserie 1' auftreten können.

Die in der Einrichtphase erzeugte Jacobimatrix wird zusammen mit den "Soll-Messwerten" in der Auswerteeinheit 29 des Sensorsystems 20 abgelegt; diese Daten bilden die Grundlage für den späteren Positionier-Regelvorgang A-2 in der Arbeitsphase (siehe unten unter II.).

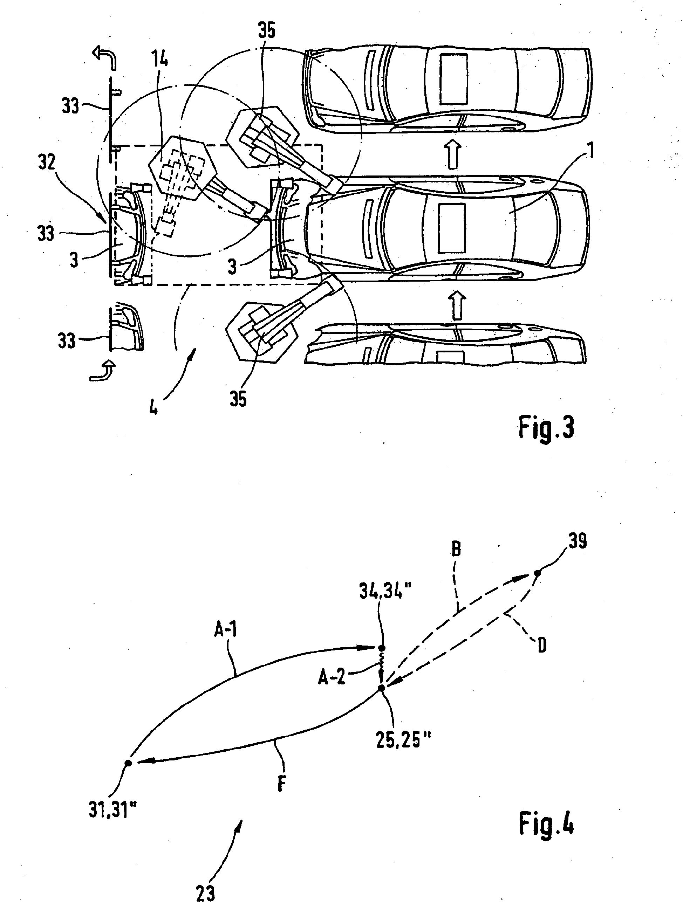

Weiterhin wird in der Einrichtphase eine Verfahrbahn 23 der Roboterhand 17 (und somit des Montagewerkzeugs 5) generiert, die in der späteren Arbeitsphase II. gesteuert durchlaufen wird. Diese Verfahrbahn 23 ist schematisch in Figur 4 dargestellt. Den Ausgangspunkt der Verfahrbahn 23 bildet eine sogenannte "Rückzugsposition" 31, die so gewählt ist, dass eine neue Karosserie 1 in den Arbeitsraum 24 des Roboters 14 eingeführt werden kann, ohne dass Kollisionen der Karosserie 1 mit dem Montagewerkzeug 5 oder dem darin gehaltenen Frontmodul 3 zu befürchten sind. Diese Rückzugsposition 31 kann beispielsweise einer Entnahmestation 32 entsprechen, in der das Montagewerkzeug 5 ein zu verbauendes Frontmodul 3 aus einem Werkstückträger 33 oder von einem Transportband entnimmt (siehe Figur 3). Ausgehend von dieser Rückzugsposition 31 umfasst die Verfahrbahn 23 folgende separate Abschnitte:
A-l Das Montagewerkzeug 5 mit eingelegtem Frontmodul 3 wird auf einer gesteuert zu durchlaufenden Bahn A-1 von der Rückzugsposition. 31 in eine fest vorgegebene, sogenannte "Näherungsposition" 34 gebracht, die so gewählt ist, dass alle Einzelsensoren 21 des Sensorsystems 20 gültige Messwerte des jeweiligen Bereiches 12,13,26,27,9,28 des Frontmoduls 3 und/oder der Karosserie 1 erfassen können, während gleichzeitig gewährleistet ist, dass keine Kollisionen des Montagewerkzeugs 5 oder dem Frontmodul 3 mit der Karosserie 1 auftreten können.
A-2 Das Montagewerkzeug 5 mit eingelegtem Frontmodul 3 wird auf einer geregelt zu durchlaufenden Bahn A-2 von der Näherungsposition 34 in die (wie oben beschrieben "eingelernte") Montageposition 25 gebracht, in der das im Montagewerkzeug 5 gehaltene Frontmodul 3 lage- und winkelgenau gegenüber dem Frontausschnitt 2 der Karosserie 1 ausgerichtet ist. Was während dieses geregelt zu durchlaufenden Prozessschritts im einzelnen geschieht, wird weiter unten (in II. Arbeitsphase) beschrieben.
F Die Fixiervorrichtung 19 wird gelöst, und das Montagewerkzeug 5 wird robotergesteuert in die Rückzugsposition 31 zurückbewegt.

Die im Rahmen der Einrichtphase erzeugte Verfahrbahn 23 des Montagewerkzeugs 5 besteht somit aus zwei Abschnitten A-1 und F, die in der späteren Arbeitsphase gesteuert durchlaufen werden, sowie einem in der späteren Arbeitsphase geregelt zu durchlaufenden Abschnitt A-2. Die Schritte A-1 und F können während der Einlernphase des Montagewerkzeugs 5 interaktiv eingegeben werden, oder sie können in Form eines (ggf. offline generieren) Programms im Steuersystem 16 des Roboters 14 abgelegt werden.

### II. Arbeitsphase

In der Arbeitsphase werden sequentiell (beispielsweise auf einem Förderband) Karosserien 1 in den Arbeitsraum 24 des Montagesystems 4 zugeführt, dort für die Dauer des Montage-vorgangs aus der Fördertechnik ausgehoben, und mit Hilfe des Montagesystems 4 - unter Verwendung der in der Einrichtphase eingelernten Verfahrbahn - mit lagegenau montierten Frontmodulen 3 versehen (siehe Figur 3).

### Verfahrbahn-Abschnitt A-1 (Näherungsphase) :

Während des Zuführens der neuen Karosserie 1 befindet sich das Montagewerkzeug 5 in der Rückzugsposition 31 und nimmt dort aus der Entnahmestation 32 ein zu montierendes Prontmodul 3 auf; dies ist in Figur 3 gestrichelt dargestellt. Die Aufnahme des Frontmoduls 3 kann durch einen geregelten Prozess mit Hilfe einer Messsensorik erfolgen, so dass eine definierte Lage des Frontmoduls 3 in der Fixiervorrichtung 19 gewährleistet ist. Verteilhafterweise wird dann beim Aufnehmen des Frontmoduls 3 aus dem Werkstückträger 33 das Sensorsystem 20 des Montagewerkzeugs 5 verwendet, das auf die Bereiche 26,27,28 des Frontmoduls 3 ausgerichtet ist und daher geeignete Messwerte für einen geregelten Positioniervorgang des Montagewerkzeugs 5 gegenüber dem Frontmodul 3 liefert. - Allerdings kann das Frontmodul 3 ebensogut ungenau" in der Fixiervorrichtung 19 aufgenommen werden, weil - wie im folgenden bei der Beschreibung des Verfahrbahn-Abschnitts A-2 dargelegt wird - bei der Ausrichtung des Frontmoduls 3 gegenüber der Karosserie 1 jegliche Ungenauigkeiten des Frontmoduls 3 bezüglich seiner Lage in der Fixiervorrichtung 19 ausgeregelt werden.

Sobald die neue Karosserie 1 in den Arbeitsraum 24 hineinbewegt und dort fixiert worden ist, wird das Montagewerkzeug 5 mit (lagegenau oder ungenau) eingelegtem Frontmodul 3 gesteuert in die Näherungsposition 34 der Figur 2a bewegt.

### Verfahrbahn-Abschnitt A-2 (Positiönierphase des Montagewerkzeugs 5):

Ausgehend von der Näherungsposition 34 wird eine Positionierphase (Bahnabschnitt A-2 in Figur 4) des Montagewerkzeugs 5 durchlaufen, im Rahmen derer das im Montagewerkzeug 5 gehaltene Frontmodul 3 in die (während der Einlernphase eingelernte) Montageposition 25 gegenüber der Karosserie 1 gebracht und dabei lagegenau gegenüber dem Frontausschnitt 2 der Karosserie 1 ausgerichtet wird. Hierzu werden durch die Sensoren 21 des Sensorsystems 20 Messwerte in ausgewählten Bereichen 12,13,26,27,9,28 des Frontmoduls 3 und der Karosserie 1 aufgenommen. Mit Hilfe dieser Messwerte und der in der Einrichtphase bestimmten Jacobimatrix wird ein Bewegungsinkrement (Verschiebungsvektor) berechnet, das die Differenz zwischen den aktuellen (Ist-) Sensormesswerten und den (Soll-) Sensormesswerten verkleinert. Das im Montagewerkzeug 5 gehaltene Frontmodul 3 wird dann mit Hilfe des Roboters 14 um dieses Bewegungsinkrement verschoben und/oder geschwenkt, und während der laufenden Bewegung werden neue (Ist-) Sensormesswerte aufgenommen.

Dieser iterative Mess- und Verschiebe-Vorgang wird in einer Regelschleife so lange wiederholt, bis die Differenz zwischen den aktuellen (Ist-) und den angestrebten (Soll-) Sensormesswerten ein vorgegebenes Fehlermaß unterschreitet, oder bis sich diese Differenz nicht mehr über einen im Vorfeld festgesetzten Schwellenwert hinaus ändert. Das Frontmodul 3 befindet sich nun (im Rahmen der durch Fehlermaß bzw. Schwellenwert vorgegebenen Genauigkeit) in der (in Figur 2b dargestellten) Montageposition 25 gegenüber der Karosserie 1.

Durch die in dieser Positionierphase A-2 durchlaufene iterative Minimierung werden sowohl Ungenauigkeiten der Karosserie 1 bezüglich ihrer Lage und Ausrichtung im Arbeitsraum 24 des Roboters 14 als auch eventuell vorhandene Formfehler des Frontbereichs 2 der Karosserie 1 (d.h. Abweichungen von der ("Master") Karosserie 1') kompensiert. Simultan werden Ungenauigkeiten des Frontmoduls 3 bezüglich seiner Lage und Ausrichtung im Montagewerkzeug 5 und eventuell vorhandene Formfehler des Frontmoduls 3 kompensiert (d.h. Abweichungen vom ("Master") Frontmodul 3'). Das Frontmodul 3 wird also im Zuge dieses iterativen Regelprozesses - unabhängig von Form- und Lageungenauigkeiten - in der "optimalen" Weise in den Frontausschnitt 2 der Karosserie 1 eingepasst. Zur separaten Erkennung und Bewertung von Formfehlern des Frontmoduls 3 und der Karosserie 1 können auf dem Montagewerkzeug 5 zusätzliche (d.h. für die eigentliche Positionieraufgabe nicht benötigte) Sensoren vorgesehen werden, deren Messwerte ausschließlich oder teilweise zur Erfassung der Formfehler verwendet werden. Weiterhin können die Messwerte der Einzelsensoren 21 mit unterschiedlichen Gewichtungsfaktoren versehen werden, um eine gewichtete Lageoptimierung des Frontmoduls 3 gegenüber dem Frontauschnitt 2 der Karosserie 1 herbeizuführen.

Eine wichtige Eigenschaft der Positionierphase A-2 ist ihre Unabhängigkeit von der Robotergenauigkeit: Da der Positioniervorgang auf einem iterativen Vergleich der (Ist-) Messwerte mit (Soll-) Messwerten beruht, wird jede Positionsungenauigkeit des Roboters 14 sofort durch den iterativen Regelprozess kompensiert.

### Arbeitsgang E (Befestigung des Frontmoduls 3 an der Karosserie 1)

In der nun eingenommenen Montageposition 25 des Montagewerkzeugs 5, in der das Frontmodul 3 optimal gegenüber dem Frontausschnitt 2 positioniert ist, erfolgt die Befestigung des Frontmoduls 3 an der Karosserie 1. Hierfür kommen beispielsweise (in Figur 3 angedeutete) separate Roboter 35 zum Einsatz, an denen Schraubwerkzeuge befestigt sind.

### Verfahrbahn-Abschnitt F (Rückzug des Montagewerkzeugs 5) :

Nach dem Montieren des Frontmoduls 3 wird die Fixiervorrichtung 19 des Montagewerkzeugs 5 gelöst, so dass das Frontmodul 3 frei an der Karosserie 1 hängt. In dieser Lage können ggf. (mit Hilfe der Sensoren 21) Kontrollmessungen der Fugenmaße, Spalte und Tiefenmaße in den Bereichen 12,13,26,27,9,28 durchgeführt werden; sollten dabei Abweichungen von den Sollmaßen festgestellt werden, so wird dem Bediener der Anlage eine definierte Information zur Nacharbeit zugesandt.

Anschließend wird die Fixiervorrichtung 19 des Montagewerkzeugs 5 in einer solchen Weise aus der Eingriffsposition herausbewegt, dass das Montagewerkzeug 5 kollisionsfrei robotergesteuert aus der Montageposition 25 in die Rückzugsposition 31 zurückbewegt werden kann. Die Karosserie 1 wird entspannt, ausgehoben und gefördert. Parallel bzw. anschließend wird das Montagewerkzeug 5 mit einem neuen Frontmodul 3 bestückt, und eine neue Karosserie 1 wird dem Arbeitsraum 24 des Montagesystems 4 zugeführt.

Bisher wurde angenommen, dass das Frontmodul 3 fertigungsbedingte Toleranzen aufweisen und/oder lageungenau im Montagewerkzeug 5 aufgenommen sein kann, weswegen zur Einpassung des Frontmoduls 1 im Rahmen der Positionierphase A-2 Messwerte sowohl auf den (für die Einpassqualität relevanten) Randbereichen 22,26,27 des Frontmoduls 3 als auch auf den Nachbarbereichen 12,13 der Karosserie 1 verwendet wurden. - Eine andere Einpassstrategie ist möglich, falls die Lage des Frontmoduls 3 im Fixierwerkzeug 19 mit hoher Reproduzierbarkeit bekannt ist, und falls das Frontmodul 3 toleranzfrei ist (bzw. als toleranzfrei angenommen werden kann). In diesem Fall, in dem eine hochgenaue Ausrichtung des Frontmoduls im Montagewerkzeug 5 gegeben ist, brauchen zur Einpassung des Frontmoduls 3 im Rahmen der Positionierphase A-2 keine Messwerte auf den Randbereichen 22,26,27 des Frontmoduls 3 mehr aufgenommen zu werden; in diesem Fall genügt es, den Regelprozess während der Positionierphase anhand von Messwerten von Sensoren durchzuführen, die auf die Nachbarbereiche 12,13,9 der Karosserie 1 gerichtet sind.

Zur Datenkommunikation zwischen den unterschiedlichen Systemkomponenten (Auswerteeinheit 29 des Sensorsystems 20 und der Steuereinheit 16 der Roboters 14) wird in den vorliegenden Ausführungsbeispielen vorteilhafterweise eine TCP/IP-Schnittstelle eingesetzt, die eine hohe Datenrate ermöglicht. Eine solche hohe Datenrate ist notwendig, um während der geregelt zu durchlaufenden Positionierphase A-2 eine Regelung des Gesamtsystems (Sensorsysteme/Roboter) mit der Vielzahl der Einzelsensoren 21 im Interpolationstakt des Roboters 14 (typischerweise 12 Millisekunden) bewältigen zu können. Für Regelungsprobleme geringerer Komplexität - d.h. bei niedrigeren Anforderungen an die Genauigkeit und längeren Regelzeiten - kann die Regelung auch über eine konventionelle serielle Schnittstelle realisiert werden.

In der Arbeitsphase II. sollte während der Positionierphase A-2 sichergestellt sein, dass keine Berührungskontakte zwischen dem Frontmodul 3 und der Karosserie 1 auftreten; solche Berührungskontakte gehen nämlich einher mit Reibungskräften, die die Positionsregelung des Frontmoduls erheblich beeinträchtigen können. Solche störenden Berührungskontakte können beispielsweise dann auftreten, wenn die Karosserie 1 zu ungenau im Arbeitsraum 24 des Roboters 14 positioniert wurde oder wenn die Längsträgerkonsolen zu große Toleranzen aufweisen.

Im vorliegenden Ausführungsbeispiel müssen während der Regelphase insbesondere Berührungskontakte mit den (in den Figuren nicht abgebildeten) Längsträgerkonsolen der Karosserie 1 vermieden werden, an die das Frontmodul 3 im Arbeitsgang E angeschraubt wird und die senkrecht zur Fahrzeuglängsrichtung ausgerichtet sind. - Um diese Berührungskontakte zu vermeiden, wird die Näherungsphase A-1 vorteilhafterweise in einer solchen Weise gestaltet (bzw. die Näherungsposition 34 in einer solchen Weise angefahren), dass während der darauffolgenden Positionierphase A-2 keine Berührungen des Frontmoduls 3 zu den Längsträgerkonsolen auftreten können:
- Beispielsweise kann das Sensorsystem 20 mit (in den Figuren nicht gezeigten) zusätzlichen (Abstands-)Sensoren versehen sein, die den Abstand des Frontmoduls 3 gegenüber den Längsträgerkonsolen messen. Das Anfahren der Näherungsposition 34 erfolgt geregelt, mit den Messwerten der Abstandssensoren als Regelgröße; die Näherungsposition 34 ist dann erreicht, wenn der Abstand in Fahrzeuglängsrichtung zwischen dem Frontmodul 3 und den Längsträgerkonsolen ein vorgegebenes Maß hat (z.B. 2 mm). Ausgehend von dieser Näherungsposition 34 wird in der nun folgenden Positionierphase A-2 unter Verwendung der Spaltsensoren 21 das Frontmodul 3 in einer Ebene senkrecht zur Fahrzeuglängsrichtung so lange verschoben und gedreht, bis die optimalen Maße für den Spalt 15 erreicht sind.
- Alternativ kann das Frontmodul 3 im Rahmen der Näherungsphase A-1 zunächst aktiv in Berührungskontakt mit den Längsträgerkonsolen gebracht werden, wobei diese Kontaktsituation mit Hilfe Kraft-Momenten-Sensoren detektiert wird, die z.B. zwischen Montagewerkzeug 5 und Roboterhand 17 eingebaut sind. Ausgehend von dieser Kontaktsituation wird das Frontmodul 3 dann um einen bestimmten Abstand (z.B. 2 mm) von den Längsträgerkonsolen abgehoben. Diese Lage definiert die Näherungsposition 34 und bildet den Ausgangspunkt für die Positionierphase A-2, im Rahmen derer das Frontmodul 3 in den übrigen Freiheitsgraden gegenüber den umgebenden Karosseriebereichen 12,13 ausgerichtet wird.
- Alternativ kann das Montagewerkzeug 5 während der Näherungsphase A-1 schwimmend auf der Roboterhand 17 gelagert sein. Das schwimmend gelagerte Montagewerkzeug 5 wird mit dem darin gehaltenen Frontmodul 3 so weit an die Karosserie 1 angenähert, bis das Frontmodul 3 in Berührungskontakt zu allen Längsträgerkonsolen steht; in dieser Ausrichtung wird die Winkellage des Montagwerkzeugs 5 gegenüber der Roboterhand 17 fixiert, indem die schwimmende Lagerung geklemmt wird. Anschließend wird das Montagewerkzeug 5 durch den Roboter 14 definiert um ein bestimmtes Maß (z.B. 2 mm) in Fahrzeuglängsrichtung von der Karosserie 1 entfernt, so dass die Kontaktsituation zwischen Frontmodul 3 und Längsträgerkonsolen aufgelöst ist. Dies definiert die Näherungsposition 34 und bildet den Ausgangspunkt für die nun folgenden Positionierphase A-2.
Generell gesprochen werden die Berührungskontakte in der Positionierphase A-2 unterbunden, indem im Rahmen der Näherungsphase A-1 die Lage des Frontmoduls 3 gegenüber der Karosserie 1 in einigen Freiheitsgraden (hier: in Fahrzeuglängsrichtung) positioniert und fixiert wird, während in der Positionierphase A-2 nur eine Optimierung der Frontmodullage in den übrigen Freiheitsgraden (hier: senkrecht zur Fahrzeuglängsrichtung) erfolgt. Nachdem Abschluss der Positionierphase A-2 wird zu Beginn des Arbeitsgangs E die Kontaktsituation zwischen Frontmodul 3 und Karosserie 1 wieder hergestellt, so dass die Verschraubung des Frontmoduls 3 mit den Längsträgerkonsolen erfolgen erfolgen kann.

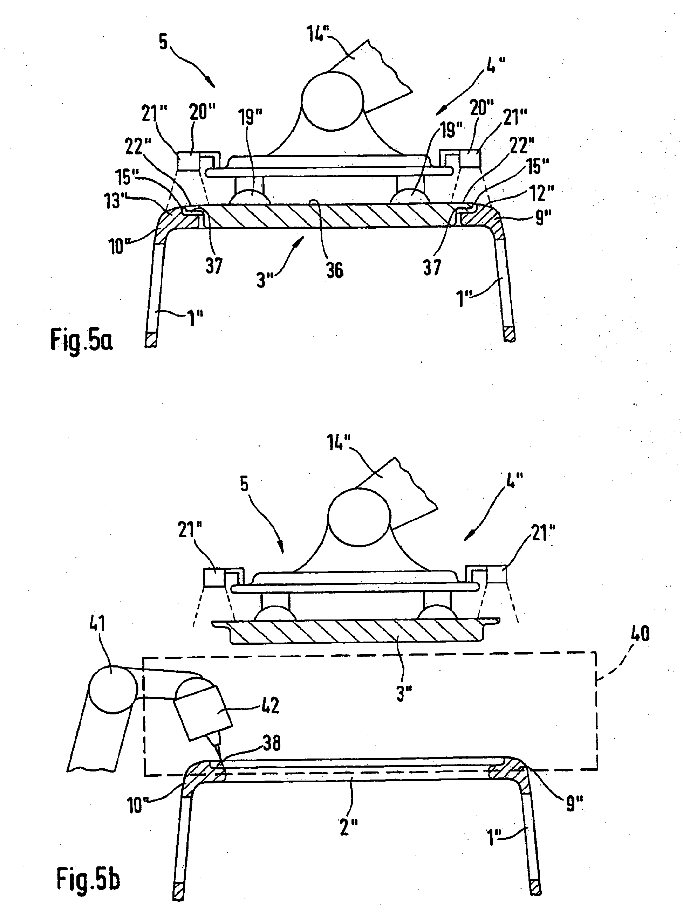

Figuren 5a und 5b zeigen als weiteren Anwendungsfall des erfindungsgemäßen Montageverfahrens eine schematische Darstellung der Montage eines Dachmoduls 3" in einen Dachausschnitt 2" einer Karosserie 1", wobei das Dachmodul 3" in den Dachausschnitt 2" eingeklebt werden soll. Die Bezugszeichen der beteiligten Bauteile und Komponenten in Figuren 5a und 5b entsprechen den Bezugszeichen des Ausführungsbeispiels der Figuren 1 bis 3, sind jedoch zur Unterscheidung jeweils mit einem Doppelstrich (") gekennzeichnet. Das Dachmodul 3" wird der Karosserie 1" in einem robotergesteuerten Montagewerkzeug 5" zugeführt, das mit einem Sensorsystem 20" versehen ist. Die Sensoren 21" sind dabei vorzugsweise Spaltsensoren, die die Breite und Tiefe eines Spalts 15" zwischen Dachmodul 3" und umgebendem Dachrahmen 9",10" messen. Sie sind auf diejenigen Referenzbereiche 12",13",22" auf Dachmodul 3" bzw. Dachrahmen 9",10" gerichtet, die für die Ausrichtung des Dachmoduls 3" gegenüber dem Dachrahmen 9",10" von besonders hoher Bedeutung sind. Die Fixiervorrichtung 19" wird in diesem Fall durch Unterdruck-Saugnäpfe gebildet, die an der Oberseite 36 des Dachmoduls 3" angreifen.

Die Einlernphase I des Montagesystems 4" erfolgt analog zu der oben beschriebenen Einlernphase des Frontmodul-Montagesystems 4. Da allerdings das Dachmodul 3" mit Hilfe eines Klebeverfahrens mit der Karosserie 1" verbunden werden soll, muss auf einen Fügebereich 37 des Dachmoduls 3" bzw. des Dachausschnitts 2" eine Klebstoffraupe 38 aufgetragen werden, bevor das Dachmodul 3" endgültig mit der Karosserie 1" verbunden wird. Daher muss die Verfahrbahn 23" die folgenden zusätzlichen Verfahrensschritte enthalten, die zwischen der (geregelt zu durchlaufenden) Positionierphase A-2 und der eigentlichen Montage (d.h. dem endgültigen Verbinden des Dachmoduls 3" mit der Fahrzeugkarosserie 1") durchlaufen werden müssen (siehe die gestrichelt eingezeichneten Verfahrbahn-Abschnitte B,D in Figur 4):

### Verfahrbahn-Abschnitt B (Ausweichphase des Montagewerkzeugs 5"):

Ausgehend von der in Verfahrbahn-Abschnitt A-2 geregelt angefahrenen Montageposition 25", die in Figur 5a dargestellt ist, wird das Montagewerkzeug 5" mit dem darin gehaltenen Dachmodul 3" vom Roboter 14" gesteuert in eine Ausweichposition 39 transportiert, die außerhalb eines im Dachbereich der Karosserie 1" gelegenen Montagebereiches 40 liegt (siehe Figur 5b). Vor dem eigentlichen Anfahren der Ausweichposition 39 kann die im Rahmen des Regelvorgangs der Po,sitionierphase A-2 erfolgte Lage- und Winkelverschiebung des im Montagewerkzeug 5" gehaltenen Dachmoduls 3" (entsprechend der Verschiebung zwischen der Näherungsposition 34" und der Montageposition 25") in Form einer sogenannten Nullpunktskorrektur an das Steuersystem des Roboters 14" weitergegeben werden. Das Steuersystem des Roboters 14" "kennt" somit die (der Montageposition 25" entsprechende) Ausgangslage, die der Optimaleinpassung des Dachmoduls 3" in den Dachausschnitt 2" entspricht und kann diese an weitere an der Montage beteiligte Werkzeuge, beispielsweise an einen Klebroboter 41, weitergeben.

Durch das gesteuerte Wegbewegen des Dachmoduls 3" in die Ausweichposition 39 wird im Montagebereich 40 des Dachausschnitts 2" Platz geschaffen für ein robotergeführtes Klebewerkzeug 42, das im Fügebereich 37 auf dem Dachausschnitt 2" eine Klebstoffraupe 38 aufträgt und sich anschließend wieder aus dem Montagebereich 40 zurückzieht (Prozessschritt C). Dadurch wird der Raum des Dachausschnitts 2" wieder frei für das Montagewerkzeug 5".

### Verfahrbahn-Abschnitt D (Rückbewegung des Montagewerkzeugs 5"):

Das Montagewerkzeug 5" mit dem Dachmodul 3" wird nun robotergesteuert aus der Ausweichposition 39 in die Montageposition 25" zurückbewegt, wodurch das Dachmodul 3" wieder lage- und winkelgenau gegenüber dem Dachausschnitt 2" der Karosserie 1" zu liegen kommt und in diesem Zustand durch die Klebstoffraupe 38 mit dem Dachausschnitt 2" verbunden wird. Diese Bahn D kann insbesondere die "Umkehr" der Bahn B sein. Das Dachmodul 3" ist somit in der gewünschten Lage und Ausrichtung mit dem Dachausschnitt 2" der Karosserie 1" verklebt.

Der Arbeitsgang E, der im vorhergehenden Ausführungsbeispiel der (mechanischen) Montage des Frontmoduls 3 an der Karosserie 1 entsprach, entfällt in diesem Fall. Analog zur Frontmodulmontage wird nun im folgenden Bahnabschnitt F die Fixiervorrichtung (Saugnäpfe 19") des Montagewerkzeugs 5" gelöst und das Dachmodul 3" somit freigegeben; anschließend wird das Montagewerkzeug 5" in die Rückzugsposition 31" zurückbewegt, die Karosserie 1" aus dem Arbeitsbereich des Roboters 14" entfernt und eine neue zu bearbeitende Karosserie zugeführt.

Das Verfahren ist - neben der Frontmodul- und Dachmodulmontage in Fahrzeugkarosserien - auf beliebige andere Montageumfänge übertragbar, bei denen mit Hilfe eines robotergeführten Montagewerkzeugs 4,4" ein Anbauteil 3,3" lagegenau an einem Werkstück 1,1", insbesondere einer Karosserie, montiert werden soll. Unter "robotergeführten" Werkzeugen sind im Zusammenhang der vorliegenden Anmeldung ganz allgemein Werkzeuge zu verstehen, die auf einem mehrachsigen Manipulator, insbesondere einem sechsachsigen Industrieroboter 14,14" montiert sind.

## Patentansprüche

1. Verfahren zur Montage eines Anbauteils (3,3") an ein Werkstück (1,1"), insbesondere an eine Fahrzeugkarosserie, wobei das Anbauteil (3,3") lagegenau gegenüber einem Referenzbereich (12,13,12",13") auf dem Werkstück (1,1") montiert wird,
- bei welchem Verfahren ein mittels eines Roboters (14,14") geführtes Montagewerkzeug (5,5") verwendet wird, welches eine Fixiervorrichtung (19,19") zur Aufnahme des Anbauteils (3,3") und ein fest mit dem Möntagewerkzeug (5,5") verbundenes Sensorsystem (20,20") mit mindestens einem Sensor (21,21") umfasst, wobei mit dem Sensorsystem (20,20") Messwerte sowohl in ausgewählten Bereichen (12,13,12",13") des Werkstücks (1,1") als auch in ausgewählten Bereichen (26,27,22") des Anbauteils (3,3") aufgenommen werden,
- wobei das Montagewerkzeug (5,5") mit dem in der Fixiervorrichtung (19,19") gehaltenen Anbauteil (3,3") zunächst im Rahmen einer Positionierphase (A-2) ausgehend von einer Näherungsposition (34,34"), welche unabhängig von der Lage des Werkstücks (1,1") im Arbeitsraum (24) des Roboters (14,14") ist, in eine Montageposition (25,25") bewegt wird, in welcher das im Montagewerkzeug (5,5") gehaltene Anbauteil (3,3") lagegenau gegenüber dem Referenzbereich (12,13,12",13") des Werkstücks (1,1") ausgerichtet ist
- wobei zum Anfahren der Montageposition (25,25") ein iterativer Regelvorgang durchlaufen wird, im Zuge dessen ein (Ist-)Messwert des mindestens einen Sensors (21,21") erzeugt wird, dieser (Ist-)Messwert mit einem im Rahmen einer Einrichtphase erzeugten (Soll-)Messwert verglichen wird, aus der Differenz zwischen (Ist-)Messwert und (Soll-) Messwert unter Verwendung einer im Rahmen der Einrichtphase berechneten Jacobi-Matrix ein Verschiebungsvektor des Montagewerkzeugs (5,5") berechnet wird und das Montagewerkzeug (5,5") um diesen Verschiebungsvektor verschoben wird,
- und wobei das Anbauteil (3,3") dann in dieser Montageposition (25,25") des Montagewerkzeugs (5,5") mit dem Werkstück (1,1") verbunden wird,

2. Verfahren nach Anspruch 1
**dadurch gekennzeichnet,**
**dass** der iterative Regelvorgang abgebrochen wird, wenn
- entweder die Abweichung zwischen (Soll-)Messwert und (Ist-)Messwert unterhalb eines vorgegebenen Schwellwerts liegt, oder
- die bei aufeinanderfolgenden Iterationsschritten zu erreichende Reduktion dieser Abweichung unterhalb eines vorgegebenen Schwellwerts liegt.

3. Verfahren nach einem der vorangehenden Ansprüche,
**dadurch gekennzeichnet,**
**dass** zur Kommunikation zwischen einer Steuervorrichtung (16) des Roboters (14,14") und einer Auswerteeinheit (29) des Sensorsystems (20,20") eine TCP/IP-Schnittstelle verwendet wird.

4. Verwendung des Verfahrens nach einem der Ansprüche 1 bis 3, **dadurch gekennzeichnet,**
**dass** das Verfahren zur Montage eines Frontmoduls (3) in einen Frontausschnitt (1) einer Fahrzeugkarosserie (2) verwendet wird.

5. Verwendung des Verfahrens nach einem der Ansprüche 1 bis 3, **dadurch gekennzeichnet,**
**dass** das Verfahren zur Montage eines Dachmoduls (3") in einen Dachausschnitt (2") einer Fahrzeugkarosserie (1") verwendet wird.

6. Montagesystem (4,4") zur Montage eines Anbauteils (3,3") an ein Werkstück (1,1"), insbesondere an eine Fahrzeugkarosserie,
- mit einem mit Hilfe eines Roboters (14,14") geführten Montagewerkzeug (5,5");
- mit einem Sensorsystem (20,20"), welches mindestens einen Sensor (21,21") umfasst und in einer solchen Weise fest mit dem Montagewerkzeug (5,5") verbunden ist, dass mit Hilfe des Sensorsystems (20,20") Messwerte sowohl in ausgewählten Bereichen (12,13,12",13") des Werkstücks (1,1") als auch in ausgewählten Bereichen (26,27,22") des Anbauteils (3,3") aufgenommen werden können;
- mit einer Auswerteeinheit (29) zur Auswertung der Messwerte des Sensorsystems (20,20");
- mit einer Steuervorrichtung (16) zur Steuerung des Roboters (14,14") und des Montagewerkzeugs (5,5"), mit deren Hilfe das Montagewerkzeug (5,5") in einer Montageposition (25,25") positionierbar ist, in der ein im Montagewerkzeug (5,5") gehaltenes Anbauteil (3,3") lagegenau gegenüber einem Referenzbereich (12,13,12", 13") des Werkstücks (1,1") ausgerichtet ist;
- und mit Mitteln zur Durchführung eines iterativen Regelvorgangs zum Anfahren der Montageposition (25,25"), unter Verwendung einer in einer Einrichtphase ermittelten Jacobi-Matrix und unter Differenzbildung zwischen Messwerten des Sensorsystems (20,20") und im Rahmen der Einrichtphase erzeugter (Soll-)Messwerte.

7. Montagesystem nach Anspruch 6,
**dadurch gekennzeichnet,**
**dass** der mindestens eine Sensor (21,21") ein metrisch unkalibrierter Sensor ist.

8. Montagesystem nach Anspruch 6 oder 7,
**dadurch gekennzeichnet,**
**dass** der mindestens eine Sensor (21,21") ein optischer Spaltmesssensor ist.

9. Montagesystem nach einem der Ansprüche 6 bis 8,
**dadurch gekennzeichnet,**
**dass** der mindestens eine Sensor (21,21") ein berührungslos und flächenhaft messender Sensor ist, der zur Oberflächenerfassung Lichtstrahlung im UV-Bereich verwendet.

## Claims

1. Method for mounting an add-on part (3, 3") onto a work piece (1, 1"), in particular onto a motor vehicle body, wherein the add-on part (3, 3") is mounted under positional precision with respect to a reference region (12, 13, 12", 13") on the work piece (1, 1 "),
- in which method a mounting tool (5, 5") guided by means of a robot (14, 14") is utilized, which [tool] comprises a fixing device (19, 19") for receiving the add-on part (3, 3") and a sensor system (20, 20"), permanently connected with the mounting tool (5, 5"), with at least one sensor (21, 21"), wherein using the sensor system (20, 20") measured values are registered in select regions (12, 13, 12", 13") of the work piece (1, 1") as well as also in select regions (26, 27, 22") of the add-on part (3, 3"),
- wherein, starting from an approximation position (34, 34") that is independent of the position of the work piece (1, 1") in the working space (24) of the robot (14, 14"), the mounting tool (5, 5") with the add-on part (3, 3") held in the fixing device (19, 19")
is moved into a mounting position (25, 25") in which the add-on part (3, 3") held in the mounting tool (5, 5") is oriented positionally precise with respect to the reference region (12, 13, 12", 13") of the work piece (1, 1"),
- wherein for approaching the mounting position (25, 25") an iterative regulation process
is passed through, in the course of which an (actual) measured value of the at least one sensor (21, 21") is generated, this (actual) measured value is compared with a (nominal) measured value generated in the course of a setup phase, by utilizing a Jacobi matrix calculated in the course of the setup phase, a displacement vector of the mounting tool (5, 5") is calculated and the mounting tool (5, 5") is displaced by this displacement vector, and
- wherein the add-on part (3, 3") in this mounting position (25, 25") of the mounting tool (5, 5") is subsequently connected with the work piece (1, 1").

2. Method as in claim 1,
***characterized in that***
the iterative regulation process is terminated if
- either the variance between the (nominal) measured value and the (actual) measured value is below a predetermined threshold value, or
- the reduction of this variance to be achieved in successive iteration steps is below a predetermined threshold value.

3. Method as in one of the preceding claims,
***characterized in that***
for the communication between a control device (16) of the robot (14, 14") and an analysis unit (29) of the sensor system (20, 20") a TCP/IP interface is utilized.

4. Use of the method as in one of claims 1 to 3,
***characterized in that***
the method is utilized for mounting a front module (3) into a front cutout (1) of a motor vehicle body (2).

5. Use of the method as in one of claims 1 to 3,
***characterized in that***
the method is utilized for mounting a roof module (3") into a roof cutout (2") of a motor vehicle body (1").

6. Mounting system (4, 4") for mounting an add-on part (3, 3") onto a work piece (1, 1"), in particular onto a motor vehicle body,
- with a mounting tool (5, 5") guided by means of a robot (14, 14");
- with a sensor system (20, 20") comprising at least one sensor (21, 21") and connected permanently with the mounting tool (5, 5") such that by means of the sensor system (20, 20") measured values can be registered in select regions (12, 13, 12", 13") of the work piece (1, 1") as well as also in select regions (26, 27, 22") of the add-on part (3, 3");
- with an analysis unit (29) for analyzing the measured values of the sensor system (20, 20");
- with a control device (16) for the control of the robot (14, 14") and of the mounting tool (5, 5"), by means of which [control device] the mounting tool (5, 5") is positionable in a mounting position (25, 25") in which an add-on part (3, 3") held in the mounting tool (5, 5") is oriented positionally precise with respect to a reference region (12, 13, 12", 13") of the work piece (1, 1"); and
- with means for carrying out an iterative regulation process for approaching the mounting position (25, 25") utilizing a Jacobi matrix determined in a setup phase and the difference formation between [actual] measured values of the sensor system (20, 20") and (nominal) measured values generated within the scope of the setup phase.

7. Mounting system as in claim 6,
***characterized in that***
the at least one sensor (21, 21") is a metrically uncalibrated sensor.

8. Mounting system as in claim 6 or 7,
***characterized in that***
the at least one sensor (21, 21") is an optical gap sensor.

9. Mounting system as in one of claims 6 to 8,
***characterised in that***
the at least one sensor (21, 21") is a contact-free area measurement optic sensor that utilizes light radiation in the ultraviolet region of the spectrum for surface acquisition.

## Revendications

1. Procédé pour monter un élément rapporté (3, 3") sur une pièce (1,1"), en particulier sur une carrosserie de véhicule, lequel élément rapporté (3, 3") étant positionné et monté exactement par rapport à une zone de référence (12, 13, 12", 13") sur la pièce (1, 1"),
- procédé dans lequel on utilise un outillage de montage (5, 5") guidé à l'aide d'un robot (14, 14") et comprenant un dispositif de fixation (19, 19") qui reçoit ledit élément rapporté (3, 3") ainsi qu'un système de capteur(s) (20, 20") avec au moins un capteur (21, 21") et solidaire de l'outillage de montage (5, 5"), le système de capteur(s) (20, 20") servant à saisir des valeurs mesurées non seulement dans des zones sélectionnées (12, 13, 12", 13") de la pièce (1, 1"), mais aussi dans des zones sélectionnées (26, 27, 22") de l'élément rapporté (3, 3"),
- l'outillage de montage (5, 5") avec l'élément rapporté (3, 3") retenu dans le dispositif de fixation (19, 19"), dans le cadre d'une phase de positionnement (A-2), étant d'abord déplacé à partir d'une position rapprochée (34, 34") et indépendante de la position de la pièce (1, 1") dans l'espace d'opération (24) du robot (14, 14"), vers une position de montage (25, 25"), dans laquelle d'élément rapproché (3,3") retenu dans l'outillage de montage (5, 5") est exactement positionné par rapport à la zone de référence (12, 13, 12", 13") de la pièce (1, 1"),
- et, pour aborder la position de montage (25, 25"), un processus de réglage itératif s'effectue, lors duquel une valeur de mesure (réelle) du (des) capteur(s) (21, 21") est générée, ladite valeur (réelle) est comparée à une valeur de mesure (désirée) générée dans le cadre d'une phase de réglage, un vecteur déplacement de l'outillage de montage (5, 5") est calculé à partir de la différence entre la valeur de mesure (réelle) et la valeur de mesure (désirée) en utilisant une matrice jacobienne calculée dans le cadre de la phase de réglage, et l'outillage de montage (5, 5") est décalé en fonction dudit vecteur de déplacement,
- et l'élément rapporté (3, 3"), étant alors relié à la pièce (1, 1 ") dans cette position de montage (25, 25") de l'outillage de montage (5, 5").

2. Procédé selon la revendication 1,
**caractérisé en ce que**
le processus de réglage itératif est interrompu
- lorsque l'écart entre la valeur de mesure (désirée) et la valeur de mesure (réelle) est inférieur à un seuil prédéterminé,
- ou lorsque la réduction de cet écart à l'issue des étapes d'itération successives est inférieure à un seuil prédéterminé.

3. Procédé selon l'une des revendications précédentes,
**caractérisé en ce que**
l'on utilise une interface TCP/IP pour la communication entre un moyen de commande (16) du robot (14, 14") et une unité d'évaluation (29) du système de capteur(s) (20, 20").

4. Utilisation du procédé selon l'une des revendications 1 à 3,
**caractérisée en ce que**
le procédé est utilisé pour monter un module frontal (3) dans une découpure frontale (1) pratiquée dans une carrosserie de véhicule (2).

5. Utilisation du procédé selon l'une des revendications 1 à 3,
**caractérisée en ce que**
le procédé est utilisé pour monter un module de toit (3") dans une découpure de toit (2") pratiquée dans une carrosserie de véhicule (1).

6. Système de montage (4, 4") pour monter un élément rapporté (3, 3") sur une pièce (1,1"), en particulier sur une carrosserie de véhicule, comprenant
- un outillage de montage (5, 5") guidé à l'aide d'un robot (14, 14"),
- un système de capteur(s) (20, 20") avec au moins un capteur (21, 21") et solidaire de l'outillage de montage (5, 5"), ledit système de capteur(s) (20, 20") servant à saisir des valeurs mesurées non seulement dans des zones sélectionnées (12, 13, 12", 13") de la pièce (1, 1"), mais aussi dans des zones sélectionnées (26, 27, 22") de l'élément rapporté (3, 3"),
- une unité d'évaluation (29) destinée à évaluer les valeurs mesurées du système de capteur(s) (20, 20"),
- une unité de commande (16) pour commander le robot (14, 14") et l'outillage de montage (5, 5"), à l'aide de laquelle l'outillage de montage (5, 5") peut être positionné dans une position de montage (25, 25"), dans laquelle un élément rapproché (3, 3") retenu dans l'outillage de montage (5, 5") est exactement positionné par rapport à une zone de référence (12, 13. 12", 13") de la pièce (1, 1"),
- et des moyens servant à effectuer un processus de réglage itératif qui assure le déplacement vers la position de montage (25, 25"), en utilisant une matrice jacobienne calculée dans le cadre d'une phase de réglage et en calculant la différence entre les valeurs mesurées du système de capteur(s) (20, 20") et les valeurs de mesure (désirées) générées dans le cadre de la phase de réglage.

7. Système de montage selon la revendication 6,
**caractérisé en ce que**
le au moins un capteur (21, 21 ") est un capteur non calibré métriquement.

8. Système de montage selon l'une des revendications 6 ou 7,
**caractérisé en ce que**
le au moins un capteur (21, 21") est un capteur optique pour la mesure de fentes.

9. Système de montage selon l'une des revendications 6 à 8,
**caractérisé en ce que**
le au moins un capteur (21, 21") est un capteur sans contact pour la mesure de surfaces utilisant de la lumière dans le domaine de l'UV pour balayer la surface.
